# EUROPÄISCHE PATENTSCHRIFT

(11) **EP 1 433 563 B1**
(45) Veröffentlichungstag und Bekanntmachung des Hinweises auf die Patenterteilung: **14.02.2007**
(21) Anmeldenummer: 03029731.1
(22) Anmeldetag: 23.12.2003
(51) Int. Cl.: B23K 26/14, B23K 26/16, B23K 26/38

(54) **Verfahren und Vorrichtung zum Laserschneiden**
Process and device for laser cutting
Procédé et dispositif de coupage au laser

(30) Priorität: 23.12.2002 DE 10261666
(43) Veröffentlichungstag der Anmeldung: 30.06.2004
(73) Patentinhaber: Maschinenfabrik Spaichingen GmbH, 78549 Spaichingen (DE)
(72) Erfinder: Engenhart, Joachim, 78628 Rottweil-Hausen (DE); Finsterle, Waldemar, 78594 Gunningen (DE); Jundt, Hartmut, 78628 Rottweil (DE)
(74) Vertreter: Freiherr von Schorlemer, Reinfried

(56) Entgegenhaltungen:
- EP-A- 0 573 331
- DE-A1- 3 405 406

## Beschreibung

Die Erfindung betrifft ein Verfahren nach der im Oberbegriff des Anspruchs 1 angegebenen Gattung und eine Vorrichtung nach der im Oberbegriff des Anspruchs 5 angegebenen Gattung, die der EP-A-0 573 331 zu entnehmen ist.

Das Schneiden insbesondere von scheiben- oder plattenförmigen Werkstücken erfolgt heute meistens durch Stanzen. Das gilt auch für die Verarbeitung von Werkstücken aus Kunststoffen, insbesondere z. B. aus Thermoplasten wie Acrylnitril-Butadien-Styrol-Copolymeren, Polypropylenen, Polycarbonaten und Polybutylenterephthalaten mit oder ohne Füllstoffen wie z. B. Talkum od. dgl., die allgemein als ABS-, PP-, PC- bzw. PBT-Kunststoffe bezeichnet und z. B. im Automobilbau vielfältig angewendet werden. Bei derartigen Werkstücken ergibt sich jedoch das Problem, daß das Kunststoffmaterial beim Stanzvorgang teilweise geschnitten und teilweise verdrängt wird, was die Bildung von Flusen sowie dadurch bedingten Ausschuß bzw. Nacharbeiten zur Folge hat. Außerdem sind Stanzverfahren unflexibel, weil bei jeder Schnittänderung ein neues Werkzeug benötigt wird.

Es sind daher auch bereits Laserschneidverfahren und -vorrichtungen der eingangs bezeichneten Gattung bekannt (z. B. DE 199 05 739 A1), bei deren Anwendung ein meistens mit einem CO₂-Laser erzeugter Laserstrahl auf eine Oberfläche des zu schneidenden Werkstücks fokussiert und die gesamte Vorrichtung mittels Robotern, Vorschubeinrichtungen od. dgl. längs einer vorgewählten Schnittlinie geführt wird. Derartige Verfahren und Vorrichtungen arbeiten sämtlich nach dem Prinzip, den Schneidvorgang in einem einzigen Arbeitsgang zu bewirken, d. h. den Laserstrahl nur einmal längs der Schnittlinie zu bewegen. Zu diesem Zweck werden die Laserleistung und die Bewegungsgeschwindigkeit des Laserstrahls so aufeinander abgestimmt, daß das Werkstück während des einmaligen Bewegungsvorgangs sicher längs der Schnittlinie durchgetrennt wird.

Weiterhin sind Verfahren und Vorrichtungen zum Laserschneiden bekannt (GB-A-2 092 741, JP-A-62 244 589), die mit zur Absaugung von beim Schneidvorgang entstehenden Gasen und/oder Dämpfen bestimmten Absaugvorrichtungen arbeiten.

Ein Vorteil des Laserschneidens besteht darin, daß im Prinzip beliebige Schnittkonturen realisiert werden können. Nachteilig ist jedoch, daß unabhängig von der im Einzelfall gewählten Bewegungsgeschwindigkeit eine vergleichsweise große Laserleistung benötigt wird und die Werkstücke daher vergleichsweise stark erwärmt werden. Das führt beim Laserschneiden von Kunststoffen häufig dazu, daß die Schnittkanten verrundet werden, anstatt scharfkantig auszufallen. Beim Laserschneiden von lackierten Kunststoffteilen ergibt sich der zusätzliche Nachteil, daß der aufgebrachte Lack im Bereich der Schnittkanten versprödet oder wegschmilzt, was seine Ursache vor allem darin hat, daß die üblicherweise verwendeten Lacke, z. B. Standardlacke auf Wasserbasis, niedrigere Schmelzpunkte als die thermoplastischen Grundmaterialien besitzen. Da es aufgrund des Materialflußes bei der Fertigung von Automobilteilen jedoch vielfach erwünscht ist, Teile zunächst zu lackieren und erst zu einem möglichst späten Zeitpunkt in der Prozeßkette zuzuschneiden, führt das Laserschneiden von anspruchsvollen und im Blickpunkt stehenden Automobilteilen wie Stoßfängern od. dgl. häufig zu einer im weiteren Prozeßverlauf nicht mehr bearbeitbaren Schnittkante mit einem gut sichtbaren, mangelhaften Rand, was unerwünscht ist. Das gilt auch dann, wenn der Laserstrahl beim Schneidvorgang mehr als einmal längs der Schnittkante bewegt wird (JP-A-2002/113 587).

Ausgehend davon besteht das der Erfindung zugrunde liegende technische Problem darin, das Verfahren und die Vorrichtung der eingangs bezeichneten Gattungen so zu gestalten, daß sie zu einwandfreien Schnittkanten führen, selbst wenn sie zum Schneiden von lackierten Thermoplasten eingesetzt werden.

Erfmdungsgemäß wird dieses Problem durch die kennzeichnenden Merkmale der Ansprüche 1 und 5 gelöst.

Die Erfindung bringt den Vorteil mit sich, daß zunächst eine Absaugöffnung in dem Werkstück ausgebildet wird, so daß sofort beim Einsetzen des eigentlichen Schneidvorgangs mit einer wirksamen Absaugung der Gase und Dämpfe begonnen werden kann. Dadurch werden sowohl scharfe Schnittkanten als auch im Bereich der an diese grenzenden Ränder saubere Oberflächen erhalten.

Weitere vorteilhafte Merkmale der Erfindung ergeben sich aus den Unteransprüchen.

Die Erfindung wird nachfolgend in Verbindung mit den beiliegenden Zeichnungen an einem bevorzugten Ausführungsbeispiel näher erläutert. Es zeigen:
Fig. 1 eine schematische Darstellung einer erfindungsgemäßen Vorrichtung zum Laserschneiden und
Fig. 2 und 3 grob schematisch die Ausbildung bzw. das Aussehen eines während des Laserschneidens auf der Werkstückoberfläche entstehenden Plasmas.

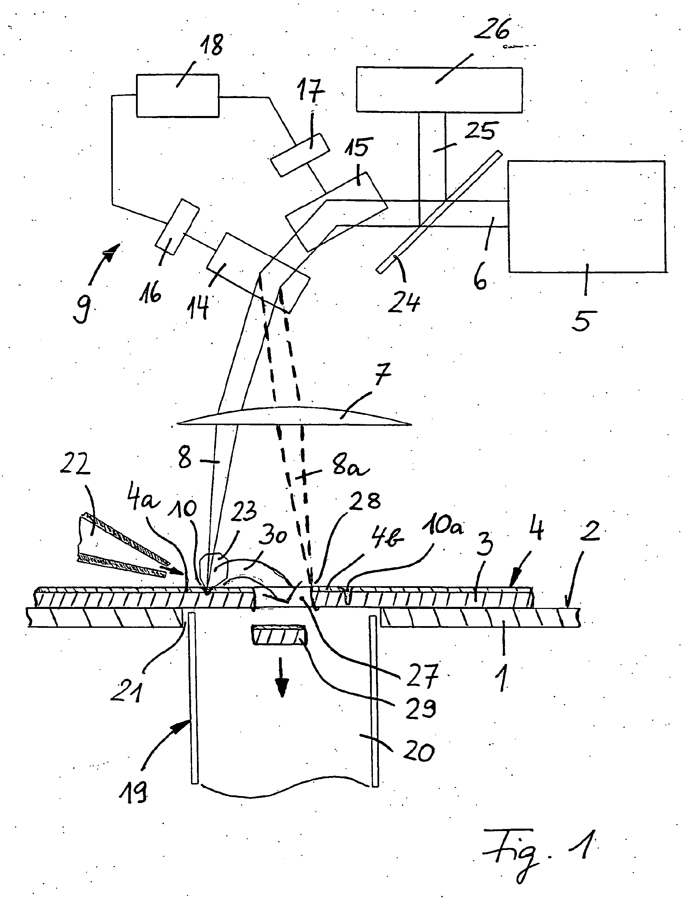

Eine erfindungsgemäße Vorrichtung zum Laserschneiden enhält nach Fig. 1 eine Halteeinrichtung 1 mit einer Auflagefläche 2 zum Auflegen eines hier plattenförmigen Werkstücks 3. Das Werkstück 3 besteht z.B. aus einem thermoplastischen Kunststoff, z.B. einem Polypropylen (PP) oder einem Ethylen/Propylen-Dien-Terpolymer (EPDM) mit z.B. 10 % bis 15 % Talkum als Füllstoff, und ist an seiner freien Oberfläche mit einer dünnen Lackschicht 4 versehen.

Die Vorrichtung enthält weiter ein Mittel 5 zur Erzeugung eines Laserstrahls 6, ein Mittel 7 zur Erzeugung eines fokussierten Laserstrahls 8 bzw. zur Fokussierung des Laserstrahls 5 auf die mit der Lackschicht 4 versehene Oberfläche des Werkstücks 3 sowie ein Mittel 9 zur Führung des fokussierten Laserstrahls 8 über die Werkstückoberfläche längs einer vorgegebenen bzw. vorwählbaren, ersten Schnittlinie 10.

Das Mittel 5 zur Erzeugung des Laserstrahls 6 enthält z.B. einen üblichen CO₂-Laser mit einer Leistung von 100 Watt, wobei die Hauptbestandteile eines Lasers wie Pumpquelle, Spiegel (Resonator), ggf. vorhandene Güte-Schalter (Q-Switch) od. dgl. als bekannt vorausgesetzt werden und daher nicht einzeln dargestellt sind. Entsprechend ist das Mittel 7 zur Fokussierung als einfache Linse dargestellt, die das üblicherweise verwendete Objektiv (z.B. f-Theta-Objektiv) repräsentiert.

Als Mittel 9 zur Führung des Laserstrahls 8 wird erfmdungsgemäß ein im Vergleich zu Robotern, Vorschubeinrichtungen od. dgl. mit hoher Geschwindigkeit steuerbares System verwendet, das in Fig. 1 als sogenannter Galvanoscanner (z.B. ein Galvanoscanner mit Planfeldoptik F = 100 mm der Fa. Raylase) dargestellt ist. Dieser enthält im Ausführungsbeispiel zwei in X- bzw. Y-Richtung bewegliche Umlenkspiegel 14 und 15, die mit Antrieben 16, 17 in Form von Magnetspulen, Servo- oder Schrittmotoren od. dgl. angetrieben werden können. Die Steuerung der Antriebe 16, 17 erfolgt vorzugsweise durch Computer, so daß der Bewegungsbahn des fokussierten Laserstrahls 8 bzw. der Kontur der Schnittlinie 10 mittels einer zur Steuerung der Antriebe 16, 17 vorgesehenen Software eine an sich beliebige Kontur vermittelt werden kann. Stellverstretend für die zahlreichen Möglichkeiten zur Steuerung der Antriebe 16, 17 ist in Fig. 1 eine Steuervorrichtung 18 dargestellt, die ein Bestandteil des Mittels 9 ist.

Die beschriebene Vorrichtung weist ferner eine Absaugvorrichtung 19 auf, die z.B. einen rohrförmigen Absaugkanal 20 und eine daran angeschlossene, nicht dargestellte Saugquelle enthält. Der Absaugkanal 20 ist dabei vorzugsweise auf der im Vergleich zum Werkstück 3 entgegengesetzten Seite der Halteeinrichtung 1, d.h. unterhalb der Auflagefläche 2 angeordnet und mündet unmittelbar an einer mittleren, in der Halteeinrichtung 1 vorgesehenen Aussparung 21. Außerdem weist die Vorrichtung vorzugsweise einen Zuführkanal 22 für ein Inertgas wie Stickstoff, Argon, Helium od. dgl. auf, der an eine nicht dargestellte Inertgasquelle angeschlossen ist und dem Zweck dient, beim Schneidvorgang eine unkontrollierte Flammenbildung im Bereich der ersten Schnittlinie 10 zu vermeiden. Der Zuführkanal 22 ist zweckmäßig auf der vom Absaugkanal 20 abgewandten Seite der Halteeinrichtung 1 und der Schnittkante 10, d. h. oberhalb der Auflagefläche 2 und so angeordnet, daß das von ihm zugeführte Inertgas zunächst über den mit einem Schnitt zu versehenen Abschnitt der Werkstückoberfläche gespült wird.

Die Vorrichtung weist erfindungsgemäß ferner eine Einrichtung zur Beobachtung eines beim Schneidprozeß sich bildenden Plasmas 23 auf. Die Beobachtungseinrichtung enthält zum einen einen in den Strahlengang des Laserstrahls 6 gestellten, z. B. unter einem Winkel von 45° zu diesem angeordneten Spiegel 24, der für das Licht des CO₂-Lasers (Wellenlänge z. B. ca. 10,6 µm) möglichst total durchlässig, für Wellenlängen im sichtbaren Bereich (ca. 0,4 bis 0,8 µm) dagegen möglichst total reflektierend ausgebildet ist. Daher läßt der Spiegel 23 den vom Mittel 5 kommenden Laserstrahl 6 im wesentlichen unbehindert durch, während er vom Plasma 23 kommendes, meistens weißes Licht nach dem Passieren des Fokussierungsmittels 7 und der Spiegel 14, 15 des Galvanoscanners reflektiert und z. B. um ca. 90° umlenkt, so daß ein reflektierter Lichtstrahl 25 einem Betrachtungsgerät 26 der Beobachtungseinrichtung zugeführt werden kann. Bei diesem Betrachtungsgerät 26 kann es sich z. B. um eine Optik handeln, die eine visuelle Betrachtung des Plasmas 23 ermöglicht. Alternativ kann das Betrachtungsgerät 26 aber auch eine Kamera, ein lichtempfmdliches Bauelement oder irgend eine andere Einrichtung enthalten oder sein, die es ermöglicht, das Plasma 23 im Bereich der gesamten Schnittlinie 10 zu betrachten, aufzunehmen und zu registrieren sowie die erhaltenen Bilder zu speichern und/oder zu messen, um bei vorgewählten Abweichungen von einem Sollwert ein Fehler- und/oder Alarmsignal auszulösen und/oder ein der Helligkeit od. dgl. des Plasmas proportionales, analoges oder digitales Signal zu erzeugen.

Ein Schneidvorgang kann mit der beschriebenen Vorrichtung im wesentlichen wie folgt vorgenommen werden:

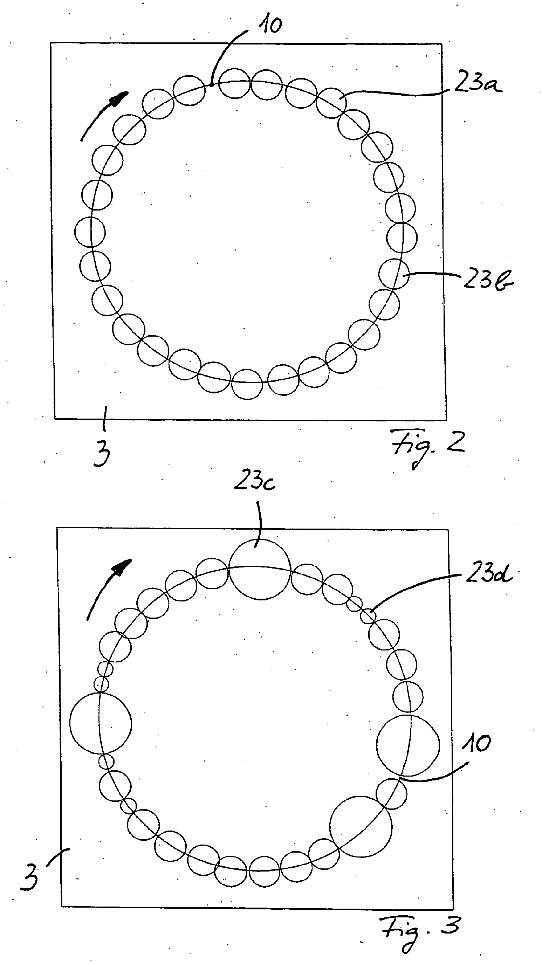

Es sei angenommen, die Schnittlinie 10 für ein vom Werkstück 3 abzutrennendes Werkstückteil solle längs eines Kreises verlaufen, wie in Fig. 2 und 3 schematisch angedeutet ist, um einen kreisrunden Ausschnitt 27 im Werkstück 3 vorzusehen. Für diesen Fall werden in der Steuervorrichtung 18 zunächst die Koordinaten der ersten Schnittlinie 10 sowie einer zweiten Schnittlinie 28 festgelegt, deren Radius kleiner als der Radius der Schnittlinie 10 ist. Anschließend wird das Mittel 5 eingeschaltet, und dem Mittel 9 bzw. dessen Antrieben 17, 18 werden in einem ersten Verfahrensschritt Steuersignale derart zugeführt, daß der fokussierte Laserstrahl 8, wie mit einer gestrichelten Linie 8a angedeutet ist, zunächst auf die den kleineren Radius aufweisende zweite Schnittlinie 28 eingestellt und längs dieser Schnittlinie 28 einmal im Kreis herumgeführt wird. Die Umlaufgeschwindigkeit des Laserstrahls 8a wird dabei vorzugsweise vergleichsweise klein gewählt, damit der Laserstrahl 8a das Werkstück 3 bei den gegebenen Energieverhältnissen vollkommen durchdringt und dadurch bei einem Umlauf ein als Abfall zu verwerfendes Stück 29 aus dem Werkstück 3 herausschneidet, das aufgrund seiner Schwerkraft herabfällt und z.B. durch eine nicht dargestellte Öffnung des Absaugkanals 20 hindurch dem Prozeß entzogen werden kann. Das Werkstück 3 besitzt nun ein Loch, dessen Größe durch die Kontur der Schnittlinie 28 gegeben ist und das eine Absaugöffnung bildet.

In einem zweiten Verfahrensschritt wird das Loch auf das Maß des Ausschnitts 27 vergrößert, dessen Größe und Form durch die Kontur der Schnittlinie 10 vorgegeben ist, indem die Antriebe 17, 18 jetzt mit den Koordinaten der ersten Schnittlinie 10 entsprechenden Signalen angesteuert werden. Außerdem wird die Inertgasquelle eingeschaltet, wodurch Inertgas über das entstehende, für Laserschneidverfahren charakteristische Plasma 23 gelenkt wird, um dadurch die Bildung einer unkontrollierten Flamme zu verhindern, die sich bei Anwesenheit von reiner Luft bzw. Sauerstoff ausbilden und dem die Schnittlinie 10 umgebenden Randbereich des Werkstücks 3 schaden könnte. Das Plasma 23 beginnt daher zu leuchten, wie dies insbesondere für das Sublimationsschneiden aufgrund der verdampfenden Kunststoffpartikel typisch ist. Gleichzeitig wird die an den Absaugkanal 20 angeschlossene Saugquelle eingeschaltet, um im Bereich der Aussparung 21 einen vorgewählten Unterdruck von z. B. 0,1 bar unter Normaldruck herzustellen und das über die Schnittlinie 10 strömende Inertgas und beim Verdampfungsprozeß entstehende Gase und/oder Dämpfe durch die zuvor im Werkstück 3 gebildete Absaugöffnung hindurch abzusaugen. Etwa entstehende, geschmolzene Kunststoffpartikel werden dabei ebenfalls in das bereits vorhandene Loch mit dem Umfang der Schnittlinie 28 abgesaugt, wie durch einen Pfeil 30 in Fig. 1 angedeutet ist. Mit Vorteil kann die Inertgasquelle auch bereits beim Herausschneiden des Stücks 29 eingeschaltet werden, um die beim zweiten Verfahrensschritt erhalten bleibenden Randabschnitte zu schützen. Das gilt insbesondere dann, wenn die durch die Schnittlinie 28 hergestellte Absaugöffnung nur wenig kleiner als der endgültige Ausschnitt 27 ist.

Während des zweiten Verfahrensschritts wird die Geschwindigkeit, mit der der fokussierte Laserstrahl 8 längs der Schnittlinie 10 umläuft, vorzugsweise so gewählt, daß das Werkstück 3 nicht in einem einzigen Umlauf längs der Schnittlinie 10 durchtrennt wird, sondern hierfür mehrere Umläufe des Laserstrahls 8 erforderlich sind. Insbesondere werden die Laserleistung und die Umlaufgeschwindigkeit des Laserstrahls 8 so aufeinander abgestimmt, daß pro Umlauf stets nur eine vorgewählte Teilschicht des Werkstücks 3 abgetragen wird. Das ist in Fig. 1 schematisch dadurch angedeutet, daß im linken Teil bei der Schnittlinie 10 angenommen ist, daß erst eine kleine, etwas dicker als die Lackschicht 4 ausgebildete Teilschicht des Werkstückmaterials entfernt wurde, während der rechte Teil der Fig. 1 einen Zustand zeigen soll, bei dem eine Schnittlinie 10a nach mehreren weiteren Umläufen des Laserstrahls 8 tiefer in das Werkstück 3 eingedrungen ist, d. h. bereits eine vergleichsweise dicke Teilschicht abgetragen wurde und das Werkstück 3 daher schon nahezu durchtrennt ist.

Bei einem praktischen Ausführungsbeispiel des erfindungsgemäßen Verfahrens wird z. B. ein ca. 3 mm dickes Kunststoff-Werkstück 3 bearbeitet. Dabei wird im ersten Verfahrensschritt der mit einem 100 W-CO₂-Laser erzeugte Laserstrahl 8 mit einer Geschwindigkeit von ca. 10 mm/s längs der Schnittlinie 28 verfahren, um das Stück 29 heraus zu schneiden, während der Laserstrahl 8 im zweiten Verfahrensschritt mit einer sehr viel höheren Geschwindigkeit von z. B. 100 mm/s längs der Schnittlinie 10 bewegt wird. Daher sind für die endgültige Ausbildung des Ausschnitts ca. 10 Umläufe des Laserstrahls erforderlich, während derer jeweils nur ca. 1/10 des Werkstücksmaterials abgetragen wird. Beide Verfahrensschritte werden bei gleicher Laserleistung, jedoch unterschiedlichen Umlaufgeschwindigkeiten durchgeführt. Dabei ist die Laserleistung zweckmäßig so gewählt, daß die Lackschicht 4 bei Einstellung der hohen Bewegungsgeschwindigkeit in einem besonders kritischen, von außen her unmittelbar an den Ausschnitt grenzenden Randabschnitt 4a während des gesamten Schneidprozesses möglichst wenig beschädigt wird.

Die erfindungsgemäße Verfahrensweise bringt u.a. den Vorteil mit sich, daß das mit dem Zuführkanal 22 zugeführte Inertgas und sonstige bei der Fertigbearbeitung längs der Schnittlinie 10 entstehende Gase und/oder Dämpfe aufgrund der vorher erfolgenden Bildung einer Absaugöffnung, die durch das Herausschneiden des Materialstücks 29 entsteht, zur Seite der Schnittkante hin abgesaugt werden können. Dadurch wird die Werkstückoberfläche insbesondere in dem Randabschnitt 4a von niedergeschlagenen Dämpfen, Schmauch, Fasern, Flusen, Kunststoffpartikeln und anderen Ablagerungen völlig freigehalten. Wegen der vergleichsweise hohen, längs der ersten Schnittlinie 10 eingestellten Umlaufgeschwindigkeit des Laserstrahls 8 ist außerdem sichergestellt, daß die Werkstückoberfläche und insbesondere die Lackschicht 4 keiner zu Beeinträchtigungen führenden Wärmebelastung ausgesetzt wird und daher sowohl der unmittelbar an die Aussparung grenzende Randbereich 4a als auch die an den Ausschnitt grenzende Schnittkante frei von sichtbaren, auf das Laserschneiden zurückzuführenden Mängeln bleibt.

Das zur Bildung der Absaugöffnung bestimmte Materialstück 29 kann demgegenüber mit einer vergleichsweise langsamen Umlaufgeschwindigkeit des Laserstrahls 8 aus dem Werkstück 3 heraus geschnitten werden, da es Abfall darstellt, seine Oberflächenqualität daher unbedeutend ist und etwaige Oberflächenmängel, die sich auf der dem verbleibenden Werkstück 3 zugewandten Seite der Schnittlinie 28 in einem zwischen den beiden Schnittlinien 28 und 10 liegenden Ringbereich 4b ergeben könnten, beim nachfolgenden Herausschneiden dieses Ringsbereichs 4b beseitigt werden. Da es für den beim zweiten Verfahrensschritt vorgesehenen Absaugprozeß mittels des Absaugkanals 20 günstig ist, das durch Entfernung des Stücks 29 gebildete Absaugloch möglichst groß und seinen Durchmesser z. B. nur wenige Zehntel Millimeter kleiner als den endgültigen Ausschnitt 27 auszubilden, kann es allerdings auch bereits im ersten Verfahrensschritt zweckmäßig sein, den Schneidvorgang zur Vermeidung von Schmauchspuren od. dgl. in mehreren Umläufen stattfinden zu lassen.

Ein wesentlicher Vorteil der erfindungsgemäßen Vorrichtung besteht darin, daß mit Hilfe der Beobachtungseinrichtung 25, 26 eine Überwachung des Prozeßverlaufs möglich ist. Wie Fig. 1 und 2 schematisch zeigen, bildet sich beim Laserschneiden am Ort des fokussierten Laserstrahls 8 ein gut sichtbares längs der gesamten Schnittlinie 10 umlaufendes Plasma 23 aus, das bei ordnungsgemäßer Prozeßführung bei jedem Umlauf gleichmäßig und zeitlich stabil, d. h. flackerfrei erscheint, wie in Fig. 2 durch Kreise 23a, 23b angedeutet ist. Durch die Beobachtungseinrichtung hindurch kann der allmählich, z. B. in Pfeilrichtung erfolgende Umlauf des Plasmas 23 beobachtet werden. Treten dagegen momentane, z. B. durch Material- oder Bedienungsfehler bedingte oder auch permanente, durch apparative Fehler bedingte Schwankungen des Plasmas 23 auf, wie in Fig. 3 durch gegenüber Fig. 2 verbreiterte und verkleinerte Plasmaquerschnitte 23c, 23d angedeutet ist, dann sind diese Schwankungen gleichbedeutend mit einem Schneidvorgang minderer Qualität. Über eine visuelle, vorzugsweise jedoch automatische Bildverarbeitung können daher Werkstücke 3, bei deren Bearbeitung das Plasma stark flattert oder andere Plasmaschwankungen auftreten, aus dem Prozeß als Abfall ausgeschieden werden. Hierzu kann z. B. die Intensität des auf das Betrachtungsgerät 26 geworfenen Lichtstrahls 25 gemessen und beim Abweichen dieser Intensität von einem als gut befundenen Sollwert ein Fehler- und/oder Alarmsignal erzeugt werden.

Durch die Erfindung lassen sich somit flusenfreie und aufgrund des Laserschneidens auch passgenaue Aussparungen bzw. Ausschnitte herstellen, deren Konturen mit Hilfe der Steuervorrichtung 18 an sich beliebig vorgewählt werden können. Dasselbe gilt für die Kontur des Abfallstücks 29, das auch nicht unbedingt denselben Konturenverlauf wie der endgültige Ausschnitt aufweisen braucht. Abgesehen davon eignet sich die Erfindung insbesondere auch zum Laserschneiden von z. B. 2 mm bis 4 mm starken, lackierten Kunststoffteilen, die mit Öffnungen versehen werden sollen, die Durchmesser von z. B. 20 mm bis 30 mm aufweisen.

Die Erfindung ist nicht auf das beschriebene Ausführungsbeispiel beschränkt, das auf vielfache Weise abgewandelt werden kann. Dies gilt insbesondere für das in Fig. 1 beispielhaft dargestellte, planparallele Werkstück 3. Stattdessen können in der beschriebenen Weise auch Werkstücke bearbeitet werden, die aus gekrümmten Platten bestehen und/oder zumindest auf der dem Laserstrahl 8 zugewandten Seite eine gekrümmte Oberfläche aufweisen. Weiter ist die Erfindung nicht auf die Herstellung von Aussparungen, insbesondere von kreisförmigen Aussparungen mit endlosen Umfangskonturen beschränkt, da diese auch rechteckige, quadratische oder sonstige Konturen aufweisen könnten. Außerdem läßt sich die Erfindung auch zum Herausschneiden von konturierten, z. B. treppenstufenförmigen Randbereichen und/oder zur Herstellung von randoffenen, z. B. halbkreisförmigen Öffnungen verwenden. In diesem Fall wird der Absaugkanal 20 zweckmäßig seitlich unterhalb des Werkstücks und auf derjenigen Seite der Schnittlinie angeordnet, auf der sich das abzutrennende Werkstückteil befindet, während der Zuführkanal 22 z. B. auf einen verbleibenden Abschnitt des Werkstücks 3 gerichtet wird. Handelt es sich dabei um einen vergleichsweise großen abzutrennenden Abschnitt, dann wird dieser vorzugsweise wie im Fall einer einen endlosen Rand aufweisenden Aussparung zunächst mit einer Absaugöffnung in Form eines Lochs versehen. Dieses wird wiederum dadurch hergestellt, daß in einem ersten Verfahrensschritt mit einer vergleichsweise geringen Bewegungsgeschwindigkeit des Laserstrahls ein bis dicht an die eigentliche Schnittlinie heranreichender Abschnitt des Werkstücks abgetrennt wird, bevor in einem zweiten Verfahrensschritt die endgültige Bearbeitung erfolgt, indem der Laserstrahl mit einer vergleichsweise großen Bewegungsgeschwindigkeit mehrmals längs der Schnittlinie über das Werkstück geführt wird. Alternativ wäre es aber möglich, auch die Absaugöffnung als randoffene Aussparung auszubilden, die bis dicht an die erste Schnittlinie heranreicht.

Weiter ist es möglich, anstelle des unter der Bezeichnung "Galvanoscanner" bekannten Mittels ein anderes Mittel zur Führung des Laserstrahls zu verwenden, sofern es die beschriebenen hohen Bewegungsgeschwindigkeiten ermöglicht. Außerdem können mit den beschriebenen Verfahren und Vorrichtungen auch Werkstücke bearbeitet werden, die aus anderen als den beschriebenen Kunststoffen, insbesondere auch aus unlackierten Materialien stehen. Dabei kann es in Abhängigkeit vom Einzelfall ausreichen, daß die Zufuhr der Inertgase oder anderer, für den Schneidprozeß förderlicher Prozeßgase abgebrochen wird, sobald sich im Absaugkanal 20 ein als zweckmäßig erkannter Saugdruck aufgebaut hat. Weiter können andere als die angegebenen Geschwindigkeiten bei der Bewegung des Laserstrahls längs der Schnittlinie gewählt werden. Insgesamt haben sich bisher Bewegungsgeschwindigkeiten und Laserleistungen als zweckmäßig erwiesen, bei denen im zweiten Verfahrensschritt pro Umdrehung od. dgl. ein Abtrag des Werkstückmaterials von ca. 0,2 mm bis 0,3 mm erfolgt. Daher wären bei derselben Laserleistung von z. B. 100 W auch z. B. Geschwindigkeiten von 200 mm/s möglich, was zur Abtragung einer Teilschicht von ca. 0,2 mm pro Durchlauf führen würde. Ferner können andere als die beschriebenen Einrichtungen zur Beobachtung des beim Schneidvorgang entstehenden Plasmas angewendet werden, wobei die Bezeichnung "Beobachtung" alle Funktionen einschließen soll, die zur Kontrolle, insbesondere auch zur On-line-Kontrolle, Überwachung, Bildverarbeitung usw. des Schneidergebnisses zweckmäßig und/oder erwünscht sind. Schließlich versteht sich, daß die verschiedenen Merkmale auch in anderen als in beschriebenen und dargestellten Kombinationen angewendet werden können, insofern diese Varianten den Schutzumfang der Ansprüche nicht verlassen.

## Patentansprüche

1. Verfahren zum Bearbeiten eines insbesondere aus Kunststoff bestehenden Werkstücks (3) durch Laserschneiden, wobei durch Führung eines Laserstrahls (8) längs einer ersten Schnittlinie (10) ein Werkstückteil von dem Werkstück (3) abgetrennt wird und dabei zugeführte und/oder entstehende Gase und/oder Dämpfe abgesaugt werden, **dadurch gekennzeichnet, daß** das abzutrennende Werkstückteil vor dem Schneidvorgang mit einer Absaugöffnung versehen wird und die Gase und/oder Dämpfe während des Schneidvorgangs durch diese Absaugöffnung hindurch abgesaugt werden.

2. Verfahren nach Anspruch 1, **dadurch gekennzeichnet, daß** die Absaugöffnung durch Laserschneiden längs einer zweiten, im abzutrennenden Werkstückteil angeordneten Schnittlinie (28) hergestellt wird.

3. Verfahren nach Anspruch 1 oder 2, **dadurch gekennzeichnet, daß** der Laserstrahl (6, 8) mehrmals längs der ersten Schnittlinie (10) über das Werkstück (3) geführt und dabei im Bereich der ersten Schnittlinie (10) jedes Mal nur eine vorgewählte Teilschicht des Werkstücks (3) abgetragen wird.

4. Verfahren nach Anspruch 3, **dadurch gekennzeichnet, daß** die Dicke der abgetragenen Teilschicht bei konstanter Laserleistung durch Wahl der Geschwindigkeit eingestellt wird, mit der der Laserstrahl (8) längs der Schnittlinie (10) über das Werkstück (3) geführt wird.

5. Vorrichtung zum Laserschneiden eines insbesondere aus Kunststoff bestehenden Werkstücks (3), enthaltend: Mittel (5) zur Erzeugung eines Laserstrahls (6, 8), Mittel (7) zur Fokussierung des Laserstrahls (6, 8) auf eine Oberfläche des Werkstücks (3), Mittel (9) zur Führung des Laserstrahls (6, 8) längs vorgewählter Schnittlinien (10, 28), und eine Absaugvorrichtung zum Absaugen von beim Schneidvorgang zugeführten und/oder entstehenden Gasen und/oder Dämpfen, **dadurch gekennzeichnet, daß** dem Mittel (9) zur führung des Laserstrahls eine Steuervorrichtung (9) derart zugeordnet ist, daß der Laserstrahl (6, 8) von der Steuervorrichtung zunächst längs einer zur Bildung einer Absaugöffnung bestimmten Schnittlinie (28) und dann längs einer zum Abtrennen eines Werkstückteils vom Werkstück (3) bestimmten Schnittlinie (10) bewegbar ist, und die Absaugvorrichtung (9) der Lage der Absaugöffnung zugeordnet ist.

6. Vorrichtung nach Anspruch 5, **dadurch gekennzeichnet, daß** die Steuervorrichtung (18) derart eingerichtet ist, daß der Laserstrahl (6, 8) mehrmals längs der zum Abtrennen des Werkstückteils bestimmten Schnittlinie (10) über die Werkstückoberfläche führbar und dabei im Bereich dieser Schnittlinie (10) jedes Mal nur eine Teilschicht des Werkstücks (3) abtragbar ist.

7. Vorrichtung nach Anspruch 5 oder 6, **dadurch gekennzeichnet, daß** das Mittel (9) zur Führung des Laserstrahls (6, 8) einen Galvanoscanner (14, 15) enthält.

8. Vorrichtung nach einem der Ansprüche 5 bis 7, **dadurch gekennzeichnet, daß** sie eine Halteeinrichtung (1) enthält, die eine Auflagefläche (2) für das Werkstück (3) und in einem mittleren Bereich eine Aussparung (21) aufweist, und daß die Absaugvorrichtung (19) mit einem der Aussparung (21) zugeordneten, unterhalb der Auflagefläche (2) angeordneten Absaugkanal (19) versehen ist.

9. Vorrichtung nach einem der Ansprüche 5 bis 8, **dadurch gekennzeichnet, daß** sie eine Einrichtung (25, 26) zur Beobachtung eines beim Schneidprozeß entstehenden Plasmas (23) aufweist.

10. Vorrichtung nach Anspruch 9, **dadurch gekennzeichnet, daß** die Beobachtungseinrichtung (25, 26) eine zur visuellen Betrachtung des Plasmas (23) im Bereich der gesamten Schnittlinie (10) bestimmte Optik aufweist.

11. Vorrichtung nach Anspruch 9, **dadurch gekennzeichnet, daß** die Beobachtungseinrichtung (25, 26) eine Kamera aufweist.

## Claims

1. A process for machining a workpiece (3), consisting especially of plastics material, by laser cutting, wherein a workpiece part is detached from the workpiece (3) by guiding a laser beam (8) along a first cutting line (10) and supplied and/or generated gases and/or vapours are sucked away, **characterized in that** the workpiece part to be detached is provided with a suction opening before the cutting operation and the gases and/or vapours are sucked off through this suction opening during the cutting operation.

2. A process according to claim 1, **characterized in that** the suction opening is created by laser cutting along a second cutting line (28) disposed in the workpiece part to be detached.

3. A process according to claim 1 or 2, **characterized in that** the laser beam (6, 8) is passed over the workpiece (3) several times along the first cutting line (10) and each time only a selected partial layer of the workpiece (3) is removed in the region of the first cutting line (10).

4. A process according to claim 3, **characterized in that** the thickness of the removed partial layer is set with constant laser power by choice of the speed with which the laser beam (8) is guided over the workpiece (3) along the cutting line (10).

5. Apparatus for laser cutting a workpiece (3), consisting especially of plastics material, including: means (5) for generating a laser beam (6, 8), means (7) for focusing the laser beam (6, 8) on a surface of the workpiece (3), means (9) for guiding the laser beam (6, 8) along preselected cutting lines (10, 28) and a suction device for sucking off gases and/or vapours supplied and/or generated during the cutting operation, **characterized in that** a control device (9) is so associated with the means (9) for guiding the laser beam that the laser beam (6, 8) is movable by the control device initially along a cutting line (28) adapted to form a suction opening and then along a cutting line (10) adapted to detach a workpiece part from the workpiece (3), and the suction (9) is associated with the location of the suction opening.

6. Apparatus according to claim 5, **characterized in that** the control device (18) is so arranged that the laser beam (6, 8) can be guided over the workpiece surface several times along the cutting line (10) adapted to detach the workpiece part and only a partial layer of the workpiece (3) can be removed each time in the region of this cutting line (10).

7. Apparatus according to claim 5 or 6, **characterized in that** the means (9) for guiding the laser beam (6, 8) includes a galvano scanner (14, 15).

8. Apparatus according to any of claims 5 to 7, **characterized in that** it includes a holder device (1) which has a support surface (2) for the workpiece (3) and an opening (21) in a middle region, and **in that** the suction device (19) is provided with a suction channel (19) associated with the recess (21) and arranged below the support surface (2).

9. Apparatus according to any of claims 5 to 8, **characterized in that** it comprises a device (25, 26) for observing a plasma (23) generated during the cutting process.

10. Apparatus according to claim 9, **characterized in that** the observing device (25, 26) comprises optics adapted for visual viewing of the plasma (23) in the region of the whole cutting line (10).

11. Apparatus according to claim 9, **characterized in that** the observing device (25, 26) comprises a camera.

## Revendications

1. Procédé pour usiner par coupe au laser une pièce (3) réalisée en particulier en matière plastique, dans lequel une partie de pièce est séparée de la pièce (3) par guidage d'un faisceau laser (8) le long d'une première ligne de coupe (10), des gaz et/ou vapeurs amenés ou générés étant alors aspirés, **caractérisé en ce que** la partie de pièce à séparer est munie avant le processus de coupe d'un orifice d'aspiration et les gaz et/ou vapeurs sont aspirés par cet orifice d'aspiration pendant le processus de coupe.

2. Procédé selon la revendication 1, **caractérisé en ce que** l'orifice d'aspiration est réalisé par coupe au laser le long d'une deuxième ligne de coupe (28) disposée dans la partie de pièce à séparer.

3. Procédé selon la revendication 1 ou 2, **caractérisé en ce que** le faisceau laser (6, 8) est guidé plusieurs fois le long de la première ligne de coupe (10) sur la pièce (3) et seulement une couche partielle présélectionnée de la pièce (3) est enlevée chaque fois dans la zone de la première ligne de coupe (10).

4. Procédé selon la revendication 3, **caractérisé en ce que** l'épaisseur de la couche partielle enlevée est réglée, à puissance du laser constante, par le choix de la vitesse à laquelle le faisceau laser (8) est guidé le long de la ligne de coupe (10) sur la pièce (3).

5. Dispositif pour la coupe au laser d'une pièce (3) réalisée en particulier en matière plastique, comprenant : des moyens (5) pour produire un faisceau laser (6, 8), des moyens (7) pour focaliser le faisceau laser (6, 8) sur une surface de la pièce (3), des moyens (9) pour guider le faisceau laser (6, 8) le long de lignes de coupe (10, 28) présélectionnées et un dispositif d'aspiration pour aspirer des gaz et/ou vapeurs amenés et/ou générés lors du processus de coupe, **caractérisé en ce qu'**un dispositif de commande (18) est associé au moyen (9) de guidage du faisceau laser de telle sorte que le faisceau laser (6, 8) peut se déplacer par le dispositif de commande d'abord le long d'une ligne de coupe (28) déterminée pour former un orifice d'aspiration et ensuite le long d'une ligne de coupe (10) déterminée pour séparer une partie de pièce de la pièce (3) et **en ce que** le dispositif d'aspiration (9) est associé à la position de l'orifice d'aspiration.

6. Dispositif selon la revendication 5, **caractérisé en ce que** le dispositif de commande (18) est aménagé de telle sorte que le faisceau laser (6, 8) peut être guidé plusieurs fois sur la surface de la pièce le long de la ligne de coupe (10) déterminée pour séparer la partie de pièce et **en ce que**, alors, seulement une couche partielle de la pièce (3) peut être enlevée chaque fois dans la zone de cette ligne de coupe (10).

7. Dispositif selon la revendication 5 ou 6, **caractérisé en ce que** le moyen (9) de guidage du faisceau laser (6, 8) comprend un scanner galvanométrique (14, 15).

8. Dispositif selon l'une des revendications 5 à 7, **caractérisé en ce qu'**il comprend un dispositif de maintien (1) qui présente une surface d'appui (2) pour la pièce (3) et un évidement (21) dans une zone centrale et **en ce que** le dispositif d'aspiration (19) est muni d'un canal d'aspiration (19) associé à l'évidement (21), disposé au-dessous de la surface d'appui (2).

9. Dispositif selon l'une des revendications 5 à 8, **caractérisé en ce qu'**il présente un dispositif (25, 26) pour observer un plasma (23) formé lors du processus de coupe.

10. Dispositif selon la revendication 9, **caractérisé en ce que** le dispositif d'observation (25, 26) présente une optique déterminée pour l'observation visuelle du plasma (23) dans la zone de toute la ligne de coupe (10).

11. Dispositif selon la revendication 9, **caractérisé en ce que** le dispositif d'observation (25, 26) comporte une caméra.
